**Europäisches Patentamt**

**European Patent Office**

**Office européen des brevets**

(11) Veröffentlichungsnummer: **0 158 731**
**B1**

(12) **EUROPÄISCHE PATENTSCHRIFT**

(45) Veröffentlichungstag der Patentschrift:
26.07.89

(51) Int. Cl.⁴: **G 01 S 13/56,** G 01 S 13/52,
G 01 S 13/64

(21) Anmeldenummer: **84115743.1**

(22) Anmeldetag: **18.12.84**

(54) **Mikrowellen-Einbruchmeldesystem.**

(30) Priorität: **13.04.84 DE 3414023**

(43) Veröffentlichungstag der Anmeldung:
**23.10.85 Patentblatt 85/43**

(45) Bekanntmachung des Hinweises auf die Patenterteilung:
**26.07.89 Patentblatt 89/30**

(84) Benannte Vertragsstaaten:
**AT BE CH DE FR GB IT LI NL SE**

(56) Entgegenhaltungen:
**DE-A- 2 450 732**
**DE-A- 3 128 990**
**GB-A- 1 503 303**

(73) Patentinhaber: **Siemens Aktiengesellschaft Berlin und München, Wittelsbacherplatz 2, D-8000 München 2 (DE)**

(72) Erfinder: **von Pieverling, Klaus, Dr.-Ing., Remigerstrasse 1, D-8190 Wolfratshausen (DE)**

ACTORUM AG

## Beschreibung

Die Erfindung bezieht sich auf ein Mikrowellen-Einbruchmeldesystem gemäß dem Oberbegriff des Anspruchs 1.

Besonders schutzbedürftige Objekte, z.B. militärische Anlagen oder Kernkraftwerke, werden zusätzlich gesichert, indem man die Umgebung derartiger Anlagen mit Schutzzäunen und mit elektronischen Überwachungseinrichtungen versieht. Zum Schutz eines größeren Areals mit elektronischen Mitteln werden vorwiegend zwei Systeme eingesetzt. Zum einen werden kapazitive Schutzzäune errichtet, bei denen sich das elektrische Feld bei Annäherung eines Eindringlings ändert, so daß daraus ein Alarm begleitet werden kann. Zum anderen werden Mikrowellenschranken verwendet, bei denen die Änderung des Übertragungsverhaltens einer Transmissionsstrecke beim Eindringen in den Transmissionsbereich verändert und daraus ein Alarm abgeleitet wird.

Sowohl der in seinem Aufbau sehr aufwendige kapazitive Schutzzaun als auch die Mikrowellenschranken weisen eine Reihe von Nachteilen auf. Der zu überwachende Systemabschnitt darf im allgemeinen eine maximale Länge von 100 Metern nicht überschreiten, da sonst der Eindringort nicht genau erkannt werden kann. Ferner weisen derartige Schutzeinrichtungen innerhalb des Systemabschnitts keine Entfernungsselektion auf. Auch das ungünstige Verhältnis zwischen den Signalen und den sich über die Strecke des Systemabschnitts akkumulierenden Störsignalen führt insbesondere durch Regen oder Schnee zu erheblichen Schwierigkeiten bei der Auswertung und geben daher oft Anlaß für Fehlmeldungen. Bei Schutzeinrichtungen mit Mikrowellenschranken sind zudem aufwendige Justiermaßnahmen erforderlich. Außerdem bringt die Aneinanderreihung mehrerer Schranken beim Schutz eines längeren Streckenabschnittes Interferenzprobleme mit sich.

Es ist auch bekannt, mit Hilfe von Radargeräten eingezäunte Areale zu überwachen. Beispielsweise ist in der DE-A-1 616 424 ein System zum Überwachen eines vorgegebenen Überwachungsgebietes beschrieben, bei dem mehrere Überwachungsabschnitte gebildet sind, die jeweils zwei gegenüberliegend angeordnete, miteinander korrespondierende Radarsensoren aufweisen. Ihre Antennendiagramme sind parallel zum Schutzzaun ausgerichtet. Innerhalb eines derartigen Überwachungsabschnittes ist aber eine genaue Ortsbestimmung eines Eindringlings nicht möglich.

Aus der DE-A-2 450 732 ist ein System zum Überwachen eines vorgegebenen Überwachungsgebietes bekannt, bei dem eingezäuntes Areal mittels Impuls-Radar-Geräten auf Eindringlinge überwacht wird. Während das Radargerät gemäß der DE-A-1 616 424 nach dem Prinzip eines monostatischen «CW-Dopplerradars» arbeitet, das nur anzeigeempfindlich für radiale Bewegungsvorgänge ist, weist das Radargerät gemäß der DE-A-2 450 722 Sensoren nach der Art der bistatischen oder multistatischen Radargeräte auf. Dadurch sollen auch tangentiale Bewegungsrichtungen eines Eindringlings erfaßt werden. Aber auch dort ist eine genaue Ortsbestimmung eines Eindringlings innerhalb eines Überwachungsbereiches nicht möglich.

Aufgabe der Erfindung ist es daher, in einem eingangs beschriebenen Mikrowellen-Einbruchmeldesystem mit einem Impulsradargerät die Auswerteeinrichtung so auszubilden, daß die hohe Anzahl der vom Radargerät gelieferten Daten (z.B. 100 Mbit pro Sekunde) ohne nennenswerte Verluste am Signal/Rauschverhältnis auf Werte reduziert (z.B. 20 Kbit pro Sekunde) und aufbereitet werden, um eine Weiterverarbeitung in einem Mikrorechner zur Auswertung für Alarmkriterien zu ermöglichen.

Diese Aufgabe wird bei einem Mikrowellen-Einbruchmeldesystem mit den kennzeichnenden Merkmalen des Anspruchs 1 gelöst.

Zur Überwachung eines Areals, das eingezäunt ist, sind mehrere Überwachungsabschnitte gebildet, die jeweils einen Radarsensor aufweisen. Im allgemeinen ist der Radarsensor zwischen zwei Zäunen, die einen beispielsweise 10 bis 15 Meter breiten Geländestreifen (sterile Zone) bilden, angeordnet. Die vom Radarsensor abgestrahlten Sendesignale weisen dabei ein Antennendiagramm mit einer parallel zum Zaun laufenden Sendekeule auf. Bei dem erfindungsgemäßen Mikrowellen-Einbruchmeldesystem wird von einem Radarsensor ein Zaunabschnitt von beispielsweise ca. 800 Metern überwacht. Die impulsweise ausgesandten Sendesignale werden von im Überwachungsbereich befindlichen Objekten reflektiert und zeitlich verzögert als Echosignale empfangen. Diese Radarempfangssignale werden erfindungsgemäß in einem Radarsignalprozessor mit einer bestimmten vorgebbaren Abtastfrequenz digitalisiert und unter Bildung einer Vielzahl von Zeitschlitzen, deren Anzahl der Anzahl von zu überwachenden Entfernungstoren innerhalb eines Überwachungsabschnittes entspricht, in einen Zwischenspeicher eingeschrieben und in einer dem Zwischenspeicher nachgeschalteten Digitalfilteranordnung weiterverarbeitet. In der Digitalfilteranordnung werden die Werte einer großen Anzahl aufeinanderfolgender, digitalisierter Empfangssignale zusammengefaßt. Dabei wird aus mehreren aufeinanderfolgenden digitalisierten Empfangssignalen eines jeweiligen Empfangstores ein Mittelwert gebildet. Die Anzahl der aufeinanderfolgenden Signale hängt dabei von der Zeitkonstante der Filteranordnung ab. Die auf diese Weise erheblich in der Bandbreite reduzierten Empfangssignale werden über einen Pufferspeicher einem nachgeschalteten Mikrorechner zur Weiterverarbeitung zugeführt. Der Mikrorechner wertet diese Daten nach aus der Einbruchmeldetechnik bekannten Kriterien aus, um eine entsprechende Alarmmeldung ableiten zu können.

Mit dem erfindungsgemäßen Mikrowellen-Einbruchmeldesystem ist es möglich, sowohl sehr langsame wie auch schnellere Ziele mit verhältnismäßig kleinem Zielquerschnitt, nämlich eine eindringende Person, zu detektieren und die anfallenden Daten soweit zu reduzieren, daß sie im Mikrorechner verarbeitet werden können. Dabei ist es besonders vorteilhaft, daß innerhalb eines längeren Überwachungsabschnittes durch die Bildung von Entfernungstoren von beispielsweise jeweils 12 Metern der Eindringort genau festgestellt werden kann. Mit dem erfindungsgemäßen Radarsignalprozessor werden sämtliche Echosignale für die Signalverarbeitung einbezogen, so daß keine großen Verluste am Signalrauschverhältnis bei der Datenreduzierung entstehen.

In einer vorteilhaften Ausgestaltung der Erfindung weist die Digitalfilteranordnung mindestens zwei Filterzweige mit unterschiedlichen Filtern auf, wobei in einem Filterzweig schnell bewegliche und im anderen Filterzweig langsam bewegliche Eindringlinge bzw. Objekte erfaßt werden. Dies hat den Vorteil, daß sowohl ein laufender Eindringling als auch ein sich sehr langsam bewegender, beispielsweise rollender Eindringling detektiert werden kann.

Weitere vorteilhafte Ausgestaltung ergeben sich aus den weiteren Unteransprüchen.

Die Funktionsweise und die sich ergebenden Vorteile werden anhand der Zeichnung im folgenden näher erläutert. Dabei zeigen die

Fig. 1 ein erfindungsgemäßes Mikrowellen-Einbruchmeldesystem im Blockschaltbild mit einem Radarsensor, einem Radarsignalprozessor und einem Mikrorechner,

Fig. 2 ein Pulsdiagramm,

Fig. 3 ein Mikrowellen-Einbruchmeldesystem mit zwei Radarsensoren im Blockschaltbild,

Fig. 4 ein Ausführungsbeispiel einer Digitalfilteranordnung im Blockschaltbild,

Fig. 5 ein weiteres Ausführungsbeispiel einer Digitalfilteranordnung im Blockschaltbild und

Fig. 6 eine Anordnung eines Mikrowellen-Einbruchmeldesystems an einem Schutzzaun, schematisch dargestellt.

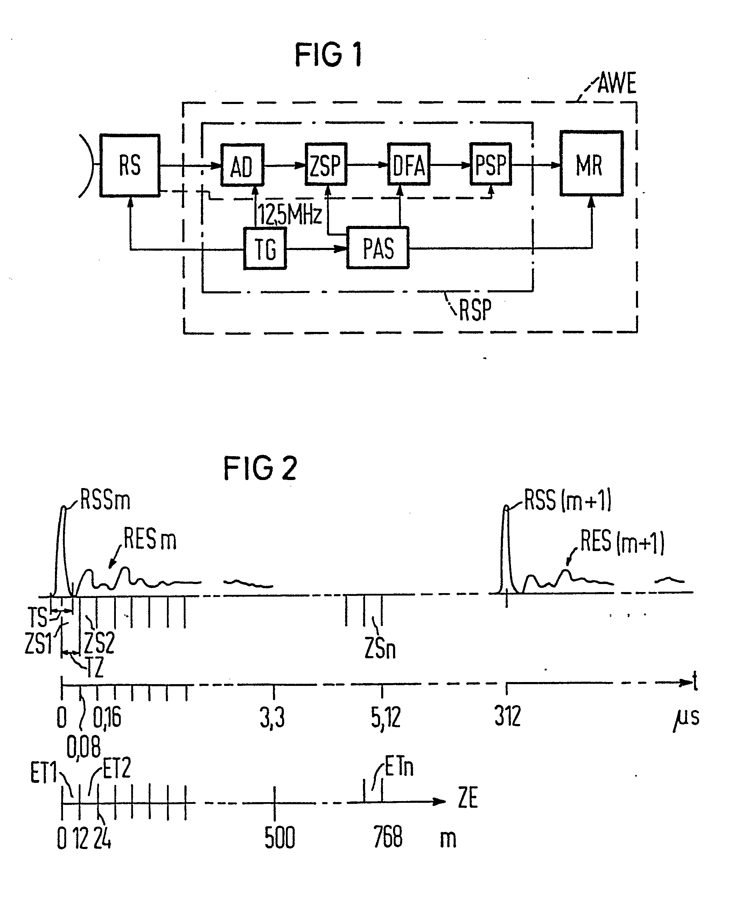

In Fig. 1 ist der Radarsensor RS mit der Auswerteinrichtung AWE im Blockschaltbild gezeigt. Der Radarsensor RS sendet in bestimmten Zeitabständen periodisch einen kurzen Sendeimpuls, beispielsweise von 80 nsec Dauer, aus. Je nach Entfernung der Objekte treffen die reflektierten Sendesignale als Echosignale zeitlich verzögert im Empfangsteil des Radarsensors ein. Diese Radarempfangssignale werden in der Auswerteeinrichtung AWE einem Analog-Digital-Wandler AD zugeführt, der die digitalisierten Signale über einen Zwischenspeicher ZSP an eine digitale Filteranordnung DFA gibt. Eine zentrale Taktstation, ein Taktgenerator TG, steuert dabei den Analog Digital-Wandler AD, d.h. er liefert die benötigte Abtastfrequenz, sowie den Sendeimpulstrigger an den Radarsensor RS. Außerdem wird eine im Radarsignalprozessor RSP angeordnete Programmablaufsteuereinrichtung PAS mit der nötigen Taktfrequenz des Taktgenerators TG versorgt. Die Programmablaufsteuerung PAS steuert den Zwischenspeicher ZSP und die digitale Filteranordnung DFA. Die mittels der digitalen Filteranordnung DFA reduzierte Datenrate der Radarempfangssignale wird einem Pufferspeicher PSP zugeführt, von dort gelangen sie an den Mikrorechner MR, der nach bestimmten Kriterien eine Auswertung vornimmt, um entsprechende Alarmsignale abzuleiten. Die Ausgabe der Daten vom Pufferspeicher PSP kann dabei in Abhängigkeit vom Radarsensor RS gesteuert werden. Die Programmablaufsteuereinrichtung PAS steuert den Mikrorechner MR. Die Funktionsweise wird im folgenden im Zusammenhang mit der Fig. 2 erläutert.

In Fig. 2 ist ein Pulsdiagramm der Sende- und Empfangssignale dargestellt. Das vom Radarsensor (RS) abgegebene Radarsendesignal RSSm mit einer Impulsdauer TS von 80 nsec erreicht zum Zeitpunkt t0 sein Maximum. Die reflektierten Radarsendesignale werden zeitlich nacheinander als Echosignale empfangen und sind mit RESm (Radarempfangssignal) bezeichnet und mit einer Abtastfrequenz von beispielsweise 12,5 MHz und einer Auflösung von 7 Bit digitalisiert. Dadurch werden z.B. 64 Zeitschlitze ZS1 bis ZSn gebildet (n = 64) mit einer Zeitdauer TZ von jeweils 80 nsec. Das nächstfolgende Radarsensorsignal RSS (m + 1) erfolgt erst nach einer Zeit von 312 µsec. Die Empfangszeit für die Radarempfangssignale beträgt etwa 10 µsec, was einer Entfernung von ca. 1,5 km entspricht. In der nachfolgenden Totzeit bis zum Abstrahlen des nächsten Sendeimpulses bleibt genügend Zeit zur Verarbeitung der empfangenen Signale. Einer Empfangszeit von beispielsweise 5,12 µsec entsprechen 64 Zeitschlitzen (n = 64) von jeweils 80 nsec. Dadurch werden 64 Entfernungstore ET gebildet, die jeweils 12 Meter aufweisen, so daß mit einem Radarsensor eine Strecke von 768 Metern überwacht werden kann. In Fig. 2 ist unterhalb des Pulsdiagramms die Zeit t in µsec dargestellt, und darunter ist entsprechend die Bildung der Entfernungstore ET1 bis ETn als Zielentfernung ZE in Metern (m) dargestellt.

Die Aufgabe des Signalprozessors besteht nun darin, einerseits die Empfangssignale zu digitalisieren und andererseits die hohe Datenrate der Empfangssignale auf eine Datenrate zu reduzieren, die vom nachgeschalteten Mikrorechner verarbeitet werden kann. Dabei sollen keine großen Verluste am Signal/Rauschverhältnis entstehen. Mit Hilfe der digitalen Filteranordnung werden die Werte von beispielsweise 256 aufeinanderfolgenden Echosignalen zusammengefaßt, so daß die Ausgabe der Meßdaten für die einzelnen Entfernungstore mit einer Wiederholrate von 256 mal 312 µsec erfolgen kann. Die Reduzierung der vom Radarsensor gelieferten Datenrate von ca. 100 Mbit pro Sekunde auf beispielsweise 20 Kbit pro Sekunde geschieht auf zweifache weise. Die erste Reduzierung erfolgt durch Zwischenspeichern der in dem kurzen Empfangszeitraum von ca. 10 µs digitalisierten Echosignale im Zwischenspeicher ZSP und der nachfolgenden Abarbeitung bis zum nächsten Sendeimpuls (Sendeimpulsabstand 312 µs). Die zweite, die wesentliche Reduzierung erfolgt in der digitalen Filteranordnung DFA, indem von mehreren aufeinanderfolgenden Daten eines jeweiligen Empfangstores eine Art Mittelwert gebildet wird, wobei die Anzahl (m) der aufeinanderfolgenden Daten von der Zeitkonstante des Filters abhängt. Im Grunde genommen werden die aufeinanderfolgenden Daten aufintegriert und der dadurch gewonnene Mittelwert an den Pufferspeicher abgegeben.

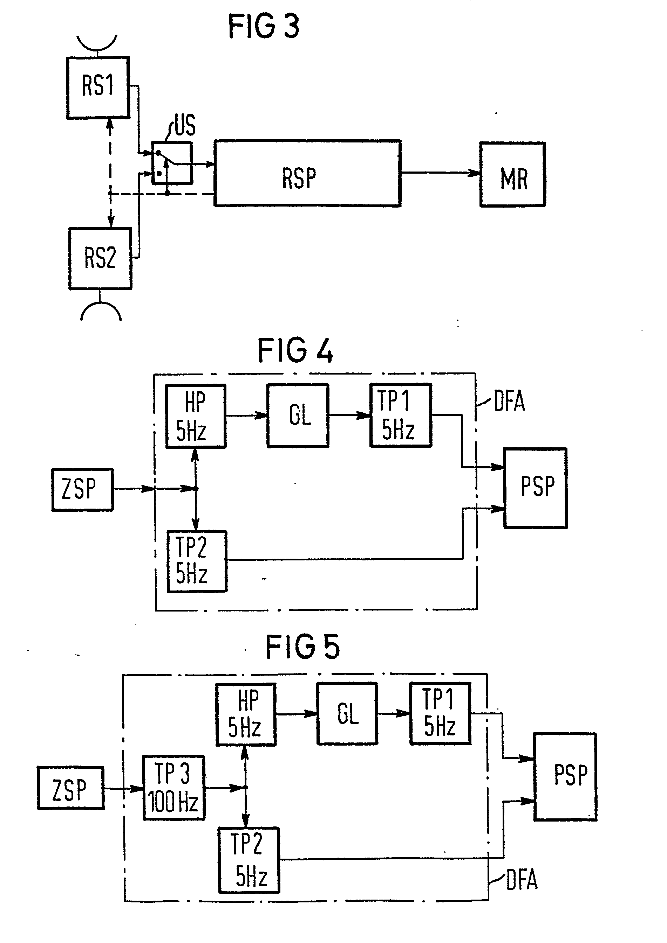

In Fig. 3 sind zwei Radarsensoren RS1 und RS2 dargestellt, die über eine steuerbare Umschalteinrichtung US abwechselnd an den Radarsignalprozessor RSP angeschlossen werden. Die Funktionsweise ist dann folgende. Der Radarsensor 1 gibt einen ersten Sendeimpuls, ein Radarsignal (RSS) ab. In der Zeit von t=0 bis t=5,12 µsec werden die Echosignale mit der Abtastfrequenz von beispielsweise 12,5 MHz digitalisiert und zwischengespeichert, so daß 64 Empfangstore gebildet werden. Nach der Zeit t von 5,12 µsec wird vom zweiten Radarsensor RS2 ein Sendeimpuls abgestrahlt, die Empfangssignale werden innerhalb der Zeit t=5,12 bis 10,24 µsec digitalisiert und zwischengespeichert, so daß weitere Empfangstore 64 bis 127 gebildet werden. Insgesamt werden also 2 × 64 Empfangstore a 12 Meter gebildet, das entspricht einer Überwachungsstrecke von 2 × 768 Metern. Die beiden Radarsensoren können dabei am Schutzzaun Rücken an Rücken angeordnet sein und somit insgesamt eine Überwachungsstrecke von annähernd 800 Metern überwachen. Mit dieser Anordnung kann aber auch eine geknickte Überwachungsstrecke überwacht werden, beispielsweise an einer Ecke des zu überwachenden Areals, so daß die beiden Radarsensoren in einem bestimmten Winkel, z.B. im 90°-Winkel zueinander angeordnet sind.

In Fig. 4 ist eine digitale Filteranordnung DFA dargestellt, die die digitalisierten Empfangssignale vom Zwischenspeicher ZSP erhält. Die digitale Filteranordnung DFA weist zwei Filterzweige auf, d.h. die Daten werden auf zwei Zweige aufgeteilt. Im ersten Zweig ist ein Hochpaßfilter HP mit einer Grenzfrequenz von 5 Hz angeordnet, dessen Ausgang auf einen Gleichrichter GL führt. Diesem nachgeschaltet ist ein weiteres Filter angeordnet, nämlich ein Tiefpaßfilter TP1 mit einer Grenzfrequenz von 5 Hz, dessen Ausgang auf den der digitalen Filteranordnung DFA nachgeschalteten Pufferspeicher PSP führt. Der zweite Filterzweig weist ebenfalls ein Tiefpaßfilter TP2 mit einer Grenzfrequenz von 5 Hz auf.

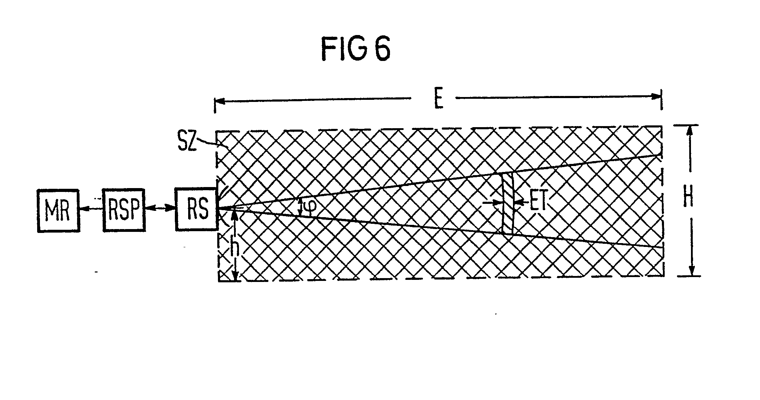

In der Fig. 5 ist eine digitale Filteranordnung DFA dargestellt, die ähnlich der digitalen Filteranordnung DFA der Fig. 4 aufgebaut ist; jedoch ist zwischen den beiden Filterzweigen und dem Zwischenspeicher ZSP ein weiteres Filter angeordnet, nämlich ein drittes Tiefpaßfilter TP3 mit einer Grenzfrequenz von 100 Hz. Die digitalisierten Radarempfangssignale werden aus dem Zwischenspeicher ZSP dem Tiefpaßfilter TP3 zugeführt. Hier werden alle Schwebungsfrequenzen über 100 Hz, die einer Bewegungsgeschwindigkeit eines Eindringlings von 1,6 Meter pro Sekunde entsprechen, geschwächt. Es folgt dann eine Aufteilung in zwei Wege. Die Empfangsechos, d.h. die Radarempfangssignale von schnell beweglichen Objekten, z.B. einem laufenden Eindringling, werden vom ersten Filterzweig erfaßt. Ein laufender Eindringling weist erfahrungsgemäß große Amplituden mit einer Dopplerfrequenz von 5 bis 150 Hz auf. Diese Echosignale durchlaufen das Hochpaßfilter HP mit einer Grenzfrequenz von 5 Hz, werden gleichgerichtet (Gleichrichterschaltung GL) und werden nochmals mit 5 Hz Tiefpaß gefiltert (TP1), um eine Mittelwertbildung über ca. 300 Empfangsperioden durchzuführen. Der zweite Filterweg dient zur Erfassung von sich langsam bewegenden Objekten. Man kann davon ausgehen, daß ein intelligenter Eindringling versucht, kriechend oder rollend durch sehr langsame Bewegung einzudringen. Erfahrungsgemäß führt dies zu kleinen Amplituden mit einer Dopplerfrequenz von 0 bis 5 Hz. Diese Echosignale durchlaufen den zweiten Filterweg mit dem Tiefpaß TP2 mit der Grenzfrequenz von 5 Hz.

Für jedes Entfernungstor stehen also am Ausgang der digitalen Filteranordnung DFA zwei Signale zur Verfügung, einmal für schnellbewegliche Ziele für 128 Entfernungstore mit 5 Hz Bandbreite und zum anderen Mal für langsam bewegliche Ziele für 128 Entfernungstore mit 5 Hz Bandbreite. Um Verluste bei der Weiterverarbeitung zu vermeiden, werden diese Signale zweckmäßigerweise in Zeitabständen von beispielsweise 312 µs abgetastet, d.h. diese Signale werden im Rhythmus des Sendeimpulstriggers ausgegeben (In Fig. 1 mit der gestrichelten Linie angedeutet, die vom Radarsensor RS zum Pufferspeicher PSP führt). Hierzu wird mit jedem neuen Sendeimpuls eine der 256 Informationen übergeben, wobei eine Datenrate von 3200/256 = 12,5 Hz entsteht. 3200 ist die Pulsfrequenz (PRF = Pulsreceptionfrequency) entsprechend einer Zeit von 312 µsec von Sendeimpuls zu Sendeimpuls.

In Fig. 6 ist eine mögliche Anordnung eines Radarsensors RS am Schutzzaun SZ dargestellt. Weist beispielsweise der Schutzzaun eine Höhe H (z.B. H = 10 m) auf, so kann der Radarsensor RS in der Höhe h von beispielsweise 5 Metern angeordnet werden. Dabei wird mit einem Halbwertswinkel von beispielsweise 1° oder weniger ein Antennenrichtdiagramm erzeugt, das parallel zum Schutzzaun SZ verläuft. Dabei kann ein Überwachungsabschnitt E von über 700 Metern überwacht werden. Dem Radarsensor RS sind der Radarsignalprozessor RSP und der Mikrorechner MR nachgeschaltet. Üblicherweise wird ein Radarsensor zwischen zwei Schutzzäunen innerhalb einer sterilen Zone zu deren Überwachung angeordnet.

Bezugszeichenliste
TG  Taktgenerator
SR  Radarsensor
RES  Radar-Empfangssignale (reflektierte Sendesignale)
AWE  Auswerteeinrichtung
PAS  Programmablaufsteuereinrichtung
RSP  Radarsignalprozessor
AD  Analog/Digital-Wandler
ZSP  Zwischen-Speicher

MR    Mikrorechner
DFA   Digitalfilteranordnung
PSP   Pufferspeicher
RSS   Radar-Sendesignal
TS    Zeit eines Sendeimpulses (RSS), z.B. 80ns
TZ    Zeit eines Zeitschlitzes (ZS), z.B. 80ns
ZS    Zeitschlitz = Abtastzeit
ET    Entfernungstor = 1 Zeitschlitz
ZE    Zielentfernung
TP    Tiefpaß
HP    Hochpaß
GL    Gleichrichter

## Patentansprüche

1. Mikrowellen-Einbruchmeldesystem zur Überwachung eines Areals mit einem Radarsensor in Form eines Impulsradargeräts und einer Auswerteeinrichtung, wobei der Radarsensor (RS) pulsweise Radarsignale (RSS) aussendet und die reflektierten Sendesignale als Radarempfangssignale (RES) der Auswerteeinrichtung (AWE) zugeführt werden, die einen Radarsignalprozessor (RSP) und einen Mikrorechner (MR) aufweist, dadurch gekennzeichnet, daß der Radarsignalprozessor (RSP) einen Analog/Digital-Wandler (AD), eine Programmablaufsteuereinrichtung (PAS), einen Taktgenerator (TG), der den Radarsensor (RS), den Analog/Digital-Wandler (AD) und die Programmablaufsteuereinrichtung (PAS) beaufschlagt, einen Zwischenspeicher (ZSP) und eine zur Erfassung von schnell und langsam beweglichen Objekten vorgesehene Digitalfilteranordnung (DFA), die beide von der Programmablaufsteuereinrichtung (PAS) beaufschlagt sind, sowie einen ansteuerbaren Pufferspeicher (PSP) aufweist, daß im Radarsignalprozessor (RSP) die Radarempfangssignale (RES) mit dem Analog/Digital-Wandler (AD) unter Bildung einer Vielzahl (n) von Zeitschlitzen (ZS), deren Anzahl (n) der Anzahl von zu überwachenden Entfernungstoren (ET) entspricht, digitalisiert und in dem Zwischenspeicher (ZSP) gespeichert werden, daß die digitalisierten Empfangssignale (DES) aus dem Zwischenspeicher (ZSP) der nachgeschalteten Digitalfilteranordnung (DFA) zugeführt werden, wobei die Bandbreite der Empfangssignale (DES) reduziert wird, indem für jedes Entfernungstor (ET1 bis ETn) aus einer Mehrzahl (m) von aufeinanderfolgenden Radarempfangssignalen (RES) die digitalisierten Empfangssignale (DES) eines jeweiligen Entfernungstors (ET) durch Mittelwertbildung zusammengefaßt werden und daß die integrierten Empfangssignale (IES) im Pufferspeicher (PSP) zwischengespeichert und an den nachgeschalteten Mikrorechner (MR) zur Auswertung und Alarmmeldung gegeben werden.

2. Mikrowellen-Einbruchmeldesystem nach Anspruch 1, dadurch gekennzeichnet, daß die Digitalfilteranordnung (DFA) zumindest zwei mit den digitalisierten Empfangssignalen (DES) beaufschlagte Filterzweige mit unterschiedlichen Filtern (HP, GL TP1; TP2) aufweist, wobei in einem Filterzweig schnell bewegliche und im anderen Filterzweig langsam bewegliche Objekte erfaßt werden.

3. Mikrowellen-Einbruchmeldesystem nach Anspruch 2, dadurch gekennzeichnet, daß die Digitalfilteranordnung (DFA) im ersten Filterzweig einen Hochpaß (HP) mit einem nachgeschalteten Gleichrichter (GL) und diesem nachgeschaltet einen ersten Tiefpaß (TP1) und im zweiten Filterzweig einen zweiten Tiefpaß (TP2) aufweist.

4. Mikrowellen-Einbruchmeldesystem nach Anspruch 2 oder 3, dadurch gekennzeichnet, daß die Digitalfilteranordnung (DFA) ein zusätzliches Filter (TP3) aufweist, das zwischen dem Zwischenspeicher (ZSP) und den Filterzweigen angeordnet ist und sehr schnell bewegliche Objekte ausfiltert.

5. Mikrowellen-Einbruchmeldesystem nach Anspruch 4, dadurch gekennzeichnet, daß das zusätzliche Filter von einem dritten Tiefpaß (TP3) gebildet ist.

6. Mikrowellen-Einbruchmeldesystem nach einem der vorhergehenden Ansprüche, dadurch gekennzeichnet, daß zwei in verschiedene Richtungen sendende Radarsensoren (RS1, RS2) über einen taktgesteuerten Umschalter (US) an den Radarsignalprozessor (RSP) und den Mikrorechner (MR) angeschlossen sind.

## Claims

1. Microwave intrusion detection system for the surveillance of an area, with a radar sensor in the form of a pulse radar device and an evaluation unit, the radar sensor (RS) transmitting radar signals (RSS) in pulsed sequence and the reflected transmission signals being fed as radar reception signals (RES) to the evaluation unit (AWE), which has a radar signal processor (RSP) and a microcomputer (MR), characterized in that the radar signal processor (RSP) has an analog/digital converter, a program sequence control unit (PAS), a clock generator (TG), which acts on the radar sensor (RS), the analog/digital converter (AD) and the program sequence control unit (PAS), an intermediate memory (ZSP) and a digital filter arrangement (DFA), which is intended for the detection of quickly and slowly moving objects, the program sequence control unit (PAS) acting on both the intermediate memory and the digital filter arrangement, as well as an activatable buffer memory (PSP), in that in the radar signal processor (RSP) the radar reception signals (RES) are digitized with the analog/digital converter (AD), forming a multiplicity (n) of time slots (ZS), the number (n) of which corresponds to the number of range gates (ET) to be watched, and are stored in the intermediate memory (ZSP), in that the digitized reception signals (DES) are fed from the intermediate memory (ZSP) to the downstream digital filter arrangement (DFA), the band width of the reception signals (DES) being reduced by the digitized reception signals (DES) of a particular range gate (ET) from a plurality (m) of successive radar reception signals (RES) being combined by averaging for each range gate (ET1 to ETn), and in that the integrated reception signals (IES) are intermediately stored in the buffer store (PSP) and passed to the downstream microcomputer (MR) for evaluation and alarm signalling.

2. Microwave intrusion detection system according to Claim 1, characterized in that the digital filter arrangement (DFA) has at least two filter branches to which the digitized reception signals (DES) are applied and having different filters (HP, GL TP1, TP2), quickly moving objects being detected in one filter branch and slowly moving objects being detected in the other filter branch.

3. Microwave intrusion detection system according to Claim 2, characterized in that the digital filter arrangement (DFA) has in the first filter branch a high-pass filter (HP) with a downstream rectifier (GL) and, downstream of the latter, a first low-pass filter (TP1), and in the second filter branch a second low-pass filter (TP2).

4. Microwave intrusion detection system according to Claim 2 or 3, characterized in that the digital filter arrangement (DFA) has an additional filter (TP3), which is arranged between the intermediate memory (ZSP) and the filter branches and filters out very quickly moving objects.

5. Microwave intrusion detection system according to Claim 4, characterized in that the additional filter is formed by a third low-pass filter (TP3).

6. Microwave intrusion detection system according to one of the preceding claims, characterized in that two radar sensors (RS1, RS2), transmitting in different directions, are connected via a clock-controlled changeover switch (US) to the radar signal processor (RSP) and the microcomputer (MR).

## Revendications

1. Système de détection d'intrusions à micro-ondes pour le contrôle d'une aire, comportant un détecteur radar réalisé sous la forme d'un radar à impulsions et un dispositif d'évaluation, et dans lequel le détecteur radar (RS) émet des signaux radar (RSS) sous forme impulsionnelle, et les signaux d'émission réfléchis sont envoyés, en tant que signaux de réception du radar (RES), au dispositif d'évaluation (AWE), qui contient un processeur (RSP) de traitement des signaux radar et un micro-ordinateur (MR), caractérisé par le fait que le processeur (RSP) contient un convertisseur analogique/numérique (AD), un dispositif (PAS) de commande d'exécution de programmes, un générateur de cadence (TG), qui charge le détecteur radar (RS), le convertisseur analogique/numérique (AD) et le dispositif (PAS) de commande d'exécution de programmes et une mémoire intermédiaire (ZSP) et un dispositif de filtrage numérique (DFA) prévu pour la détection d'objets se déplaçant rapidement et lentement, cette mémoire et ce dispositif de filtrage étant chargés par le dispositif (PAS) de commande d'exécution de programmes, ainsi qu'une mémoire tampon commandable (PSE), que dans le processeur (RSP) de traitement des signaux radar, les signaux de réception du radar (RES) sont numérisés moyennant la formation d'un nombre important (n) de créneaux temporels (ZS), dont le nombre (n) correspond au nombre de portes de distances (ET) devant être contrôlées, et sont mémorisés dans la mémoire intermédiaire (ZSP), que les signaux de réception numérisés (DES) sont envoyés à partir de la mémoire intermédiaire (ZSP) au dispositif de filtrage numérique (DFA) branché en aval, la largeur de bande des signaux de réception (DES) étant réduite grâce au fait que, pour chaque porte de distance (ET1 à ETn), les signaux de réception numérisés (DES) d'une porte respective de distance (ET) sont réunis, moyennant une formation de la valeur moyenne, à partir d'une multiplicité (m) de signaux (RES) successifs de réception du radar, et que les signaux de réception intégrés (IES) sont mémorisés temporairement dans la mémoire tampon (PSP) et sont envoyés au micro-ordinateur (MR), branché en aval, à des fins d'évaluation et de signalisation d'alarme.

2. Système de signalisation intrusion à micro-ondes suivant la revendication 1, caractérisé par le fait que le dispositif de filtrage numérique (DFA) comporte au moins deux branches de filtres, chargées par les signaux de réception numérisés (DES) et comportant des filtres différents (HP, GL TP1; TP2), des objets à déplacement rapide étant détectés dans une branche de filtre tandis que les objets à déplacement lent sont détectés dans l'autre branche de filtre.

3. Système de signalisation d'intrusion à micro-ondes suivant la revendication 2, caractérisé par le fait que le dispositif de filtrage numérique (DFA) comporte, dans la première branche de filtre, un filtre passe-haut (HP), en aval duquel est branché un redresseur (GL), en aval duquel est branché un premier filtre passe-bas (TP), et, dans la seconde branche de filtre, un second filtre passe-bas (TP2).

4. Système de signalisation d'intrusion à micro-ondes suivant la revendication 2 ou 3, caractérisé par le fait que le dispositif de filtrage numérique (DFA) comporte un filtre supplémentaire (TP3), qui est disposé entre la mémoire intermédiaire (ZSP) et les branches de filtres et élimine, par filtrage, des objets se déplaçant très rapidement.

5. Système de signalisation d'intrusion à micro-ondes suivant la revendication 4, caractérisé par le fait que le filtre supplémentaire est formé par un troisième filtre passe-bas (TP3).

6. Système de signalisation d'intrusion à micro-ondes suivant l'une des revendications précédentes, caractérisé par le fait que deux détecteurs radar (RS1, RS2), qui émettent dans des directions différentes, sont raccordés, par l'intermédiaire d'un commutateur (US) commandé de façon cadencée, au processeur (RSP) de transmission de signaux radar et au micro-ordinateur (MR).

# FIG 1

# FIG 2

# FIG 3

# FIG 4

# FIG 5

## FIG 6